**Europäisches Patentamt**

**European Patent Office**

**Office européen des brevets**

(19)

(11) Numéro de publication : **0 402 281 B1**

# FASCICULE DE BREVET EUROPEEN

(12)

(45) Date de publication du fascicule du brevet :
**02.09.92 Bulletin 92/36**

(51) Int. Cl.⁵ : **F16L 25/00, H02G 3/06**

(21) Numéro de dépôt : **90420264.5**

(22) Date de dépôt : **01.06.90**

(54) **Elément de raccord pour tubes annelés.**

(30) Priorité : **07.06.89 FR 8907749**

(43) Date de publication de la demande :
**12.12.90 Bulletin 90/50**

(45) Mention de la délivrance du brevet :
**02.09.92 Bulletin 92/36**

(84) Etats contractants désignés :
**AT BE CH DE DK ES FR GB GR IT LI LU NL SE**

(56) Documents cités :
**FR-A- 2 355 387**
**FR-A- 2 629 893**
**US-A- 3 711 633**
**US-A- 4 443 031**

(73) Titulaire : **SOFAX S.A.**
**6, rue des Bouvreuils**
**F-25110 Baume les Dames (FR)**

(72) Inventeur : **Lomberty, Marc**
**9, rue de la Gilebarde**
**F-25110 Baume-les-Dames (FR)**
Inventeur : **Rougeot, Gabriel**
**Le Vergoulot, Pouligney**
**F-25640 Roulans (FR)**

(74) Mandataire : **Moinas, Michel**
**Cabinet Michel Moinas 13 Chemin du Levant**
**F-01210 Ferney-Voltaire (FR)**

EP 0 402 281 B1

Jouve, 18, rue Saint-Denis, 75001 PARIS

## Description

La présente invention se rapporte à des éléments de raccord permettant de relier deux ou plusieurs tubes annelés entre eux et/ou de les fixer contre une paroi selon le préambule de la revendication 1.

Les tubes annelés, c'est-à-dire ceux dont la forme ressemble à une succession d'anneaux reliés les uns aux autres, sont usuellement réalisés en matière plastique tel que le polypropylène extrudé. Ces tubes permettent la réalisation de réseaux de gaines de protection complexes pour des faisceaux de fils ou câbles électriques au sein d'un bâtiment ou d'une automobile et notamment dans le compartiment moteur. En effet, compte-tenu du faible espace disponible, ces gaines ou tuyaux doivent pouvoir suivre de très près les parois non rectilignes et contourner les différents organes rencontrés. Avec de tels tubes, on peut justement réaliser des courbes dont le rayon de courbure est inférieur à deux fois leur diamètre sans que ceux-ci ne se déforment vers l'intérieur ou même se cassent.

Pour réaliser de tels réseaux de manière aisée et efficace, on emploie des pièces de fixation et/ou de raccord mettant à profit l'aspect annelé de ces tubes pour assurer un blocage longitudinal. A ce titre, on peut citer les documents US 3 711 633, US 4 443 031 et FR 2 355 387 divulguant des pièces se présentant sous la forme générale d'un tube ou d'un T s'ouvrant en deux coquilles sensiblement symétriques afin d'y insérer le tube annelé et que l'on referme et verrouille grâce à des crochets venant s'engager dans des boucles disposées le long de l'ouverture. L'intérieur de ces pièces est garni de nervures parallèles aux plans des ouvertures prévues pour les tubes (donc transversaux par rapport aux axes des ouvertures), ces nervures venant se loger entre deux anneaux du tube annelé assurant ainsi un maintien longitudinal en plus du maintien latéral.

Couramment utilisées, toutes ces pièces de raccord présentent un inconvénient majeur. En effet, afin de correctement entourer le tube annelé pour assurer une étanchéité suffisante et permettre aussi un engagement franc des crochets dans les boucles, le diamètre intérieur des ouvertures de ces pièces rigides doit être fixé à une valeur légèrement supérieure au diamètre extérieur du tube annelé. Ceci implique le maintien d'un stock important pour chacune des formes et diamètres de tubes annelés utilisés. Outre le coût propre à ce stock, il existe toujours un risque qu'un opérateur inexpérimenté utilise des pièces mal adaptées provoquant une mauvaise fermeture de la pièce si celle-ci est trop petite ou une perte d'étanchéité, donc l'intrusion de poussières, si cette pièce est trop grande.

Le but de la présente invention est un élément de raccord pour tubes annelés comprenant une coque inférieure et un couvercle supérieur dont les parois latérales présentent plusieurs encoches semi-circulaires en correspondance définissant, une fois le couvercle fermé par dessus la coque, des ouvertures circulaires pour tubes annelés, et dont les faces internes sont munies, derrière les encoches et parallèlement à celles-ci, de nervures semi-circulaires pour le blocage longitudinal de tubes, cet élément pouvant accepter une large gamme de tubes annelés de diamètres différents tout en assurant, comme auparavant, un maintien en place ferme de ces tubes et une étanchéité suffisante pour le réseau.

Ce but est atteint, selon l'invention, grâce à un élément dont les nervures sont situées sur des languettes flexibles en arc-de-cercle reliées aux faces internes dans un plan parallèle à l'ouverture correspondante, et dont les encoches sont garnies d'une suite de doigts flexibles en forme de secteur circulaire constituant pour les ouvertures des écrans en forme de couronne circulaire.

Selon un premier mode de réalisation avantageux seule la face interne de la coque est munie, derrière et parallèlement à chaque encoche, de nervures, par exemple trois, chacune située sur une languette en arc-de-cercle reliée à une paroi interne par un bras flexible, la languette médiane plus large étant disposée vis-à-vis et entre les deux autres. Avantageusement, la coque et le couvercle sont symétriques par rapport à leur plan de joint, et les bras flexibles ont une forme de V renversé, la première branche étant fixée à la paroi interne, la seconde supportant les languettes en arc-de-cercle munie d'une nervure. Alors, il peut être utile que la première branche de chacun des trois bras flexibles en forme de V renversé proche d'une ouverture soit fixée à une même pièce de maintien elle-même fixée contre la paroi interne de la coque.

Selon un second mode de réalisation avantageux, la coque inférieure est munie, derrière chaque encoche, d'au moins une languette faisant entre 3/5 et 4/5 de cercle et portant au moins une nervure semi-circulaire, laquelle languette est reliée par son milieu au fond interne de la coque, parallèlement à l'encoche. Avantageusement alors, la languette avec son moyen de liaison est une pièce indépendante rapportée. La coque et le couvercle peuvent également être symétriques par rapport à leur plan de joint.

L'invention est décrite ci-après de façon plus détaillée à l'aide d'exemple d'exécution sans caractère limitatif et illustré aux dessins annexés, dans lesquels :

– la figure 1 est une vue en perspective d'un élément en forme de T selon un premier mode de réalisation et prévu pour le raccord de trois tubes,

– la figure 2 est une vue en perspective d'un élément de raccord longitudinal prévu pour deux tubes selon le premier mode de réalisation, et

– la figure 3 est une vue en perspective d'un élément en forme de T selon le second mode de réalisation et prévu pour le raccord de trois tubes.

Bien entendu, d'autres formes notamment en croix ou en Y peuvent également être réalisées dans l'esprit de cette invention. On notera que dans ces figures, les parties ou pièces similaires sont désignées par des références identiques.

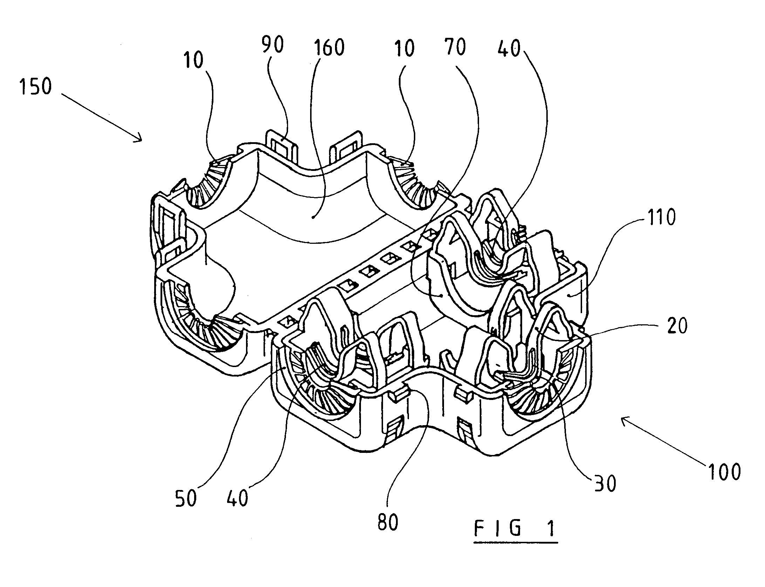

L'élément de raccord en forme de T illustré sur la figure 1 comprend un couvercle supérieur 150 relié à une coque inférieure 100 le long de leur bord longitudinal commun par une charnière, en l'occurrence une succession de ponts de matière plastique. Les bords supérieurs des parois 160 du couvercle 150 opposés au bord longitudinal sont garnis de plusieurs boucles 90 permettant, en relation avec des crochets 80 disposés sur les bords supérieurs des parois latérales 110 de la coque 100 un verrouillage de l'élément de raccord une fois le couvercle fermé par dessus la coque. Les parois latérales 160 présentent également trois encoches semi-circulaires 50 en correspondance avec trois encoches semi-circulaires identiques 50 ménagées dans les parois 110 de la coque. Ces encoches 50 sont garnies d'une suite de doigts flexibles 10 en forme de secteur circulaire constituant pour chacune de ces encoches 50 des écrans partiels en forme de demi-couronne circulaire. Comme on peut aisément le comprendre, une fois le couvercle 150 rabattu par dessus la coque 100, ces encoches 50 et doigts 10 forment trois ouvertures circulaires partiellement obstruées par un écran flexible en forme de couronne circulaire.

Selon ce premier mode de réalisation de l'invention, les nervures internes 40, situées derrière et parallèles aux encoches 50, sont respectivement placées sur des languettes en arc-de-cercle 30 qui sont chacune reliées à la paroi interne de la coque 100 par un bras 20 flexible, et ce également dans un plan parallèle à l'ouverture 50 correspondante. Il est à remarquer que, dans ce mode de réalisation, la forme de la languette 30 n'est pas en fait rigoureusement un arc-de-cercle mais plutôt constituée d'une suite de portions d'arc-de-cercle dont le rayon augmente au fur et à mesure de l'écartement par rapport au bras 20. Tel qu'illustré, seulement trois nervures sont prévues derrière chaque ouverture, la languette de la nervure médiane étant plus large et située vis-à-vis entre les deux autres.

Dans le mode de réalisation illustré sur la figure 1, la coque 100 et son couvercle 150 sont rigoureusement symétriques par rapport à leur plan de jointure : c'est-à-dire que chaque paroi latérale 110 et 160 a une hauteur égale à la moitié de la hauteur totale de l'élément de raccord. Dans cette configuration, il s'est avéré utile de rehausser le point de rotation des bras 20 tenant, dans la coque inférieure 100, les languettes 30 munies de leurs nervures 40. Pour ce, ces bras 20 ont une forme générale en V renversé, la première branche étant reliée au bord supérieur de la coque 100, la deuxième branche portant effectivement la languette 30. Ainsi, lors de la flexion du bras 20, la languette arquée 30 décrit un arc-de-cercle de rayon plus important soit, pour une variation d'un angle donné du bras 20, un débattement tangentiel plus important pour cette languette 30.

Lors de la fabrication de cet élément, il s'est avéré plus avantageux de mouler d'une part la coque 100 avec son couvercle 150 et d'autre part une série de pièces 70 garnies en leur bord supérieur de l'agencement de trois bras et languettes décrit précédemment. La partie inférieure de ces pièces 70 est adaptée pour être insérée puis fixée, par colle, soudure ou agraphe, à l'intérieur de la coque 100 proche et à l'arrière de chaque encoche 50.

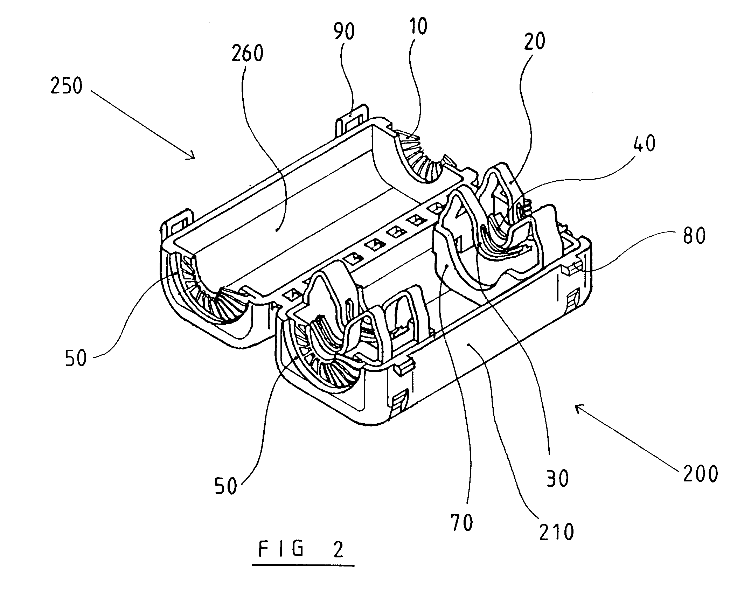

L'élément illustré sur la figure 2 est prévu pour accoupler deux extrémités de tubes et comporte une coque 200 ayant une forme sensiblement parallélépipèdique et un couvercle 250 symétrique à la coque. Les encoches 50 sont respectivement situées à chaque extrémité du parallélépipède avec les pièces 70 garnies des bras 20 et languettes 30 insérées à l'intérieur de la coque 200 juste derrière chaque extrémité.

Lors de l'utilisation de tels éléments, on installe d'abord la portion de tube annelé dans la coque inférieure 100 ouverte c'est-à-dire que l'on presse le tube annelé dans les nervures 40 et les doigts 10 jusqu'à faire correspondre l'axe du tube avec celui de la future ouverture. Durant ce mouvement descendant, les languettes 30 viennent à s'abaisser en un mouvement d'arc-de-cercle adaptant ainsi selon le diamètre du tube la portion de nervure s'insérant entre les cannelures. On notera que la disposition de la languette médiane vis-à-vis des deux autres permet de présenter au moins une nervure sur chaque quart droit et gauche de la moitié inférieure du tube assurant ainsi d'ores et déjà un maintien préliminaire du tube dans le sens vertical. Compte-tenu que les bras 20 ne sont flexibles que dans un plan parallèle à l'encoche 50, et non longitudinalement par rapport au tube, l'insertion de ces nervures entre les cannelures assure déjà un maintien longitudinal suffisant du tube. Parallèlement, les doigts 10 se sont écartés entourant cette même moitié inférieure du tube.

Une fois les différents tubes installés dans les nervures 40 des languettes flexibles 30, donc pré-maintenus dans la coque inférieure 100, on peut rabattre le couvercle 150. Les doigts 10 en correspondance appartenant à la coque et au couvercle viennent confirmer le blocage autour des tubes. Compte-tenu de l'effet de ressort des doigts 10 et des bras 20, l'encliquetage des boucles 90 dans les crochets 80 s'effectue aisément et, une fois en place, ne peuvent plus se réouvrir de manière intempestive.

Comme on le comprendra aisément, le diamètre minimum du tube annelé est déterminé par la longueur des doigts 10 et l'écartement initial des deux branches composant le bras 20 en forme de V renversé. A l'inverse, le diamètre maximum est déterminé d'une part par les dimensions des encoches 50 moins un espace de l'ordre du millimètre nécessaire à la flexion totale du doigt 10 et d'autre part par l'épaisseur des deux branches constituant le bras 20 une fois ceux-ci complètement ramenés l'un contre l'autre. Ainsi, tous les tubes ayant un diamètre compris entre ces deux valeurs extrêmes s'assoient sans difficulté dans ces nervures 40 dont la position est automatiquement optimisée par le mouvement en arc-de-cercle des languettes 30 correspondantes. L'étanchéité de l'élément est assurée de manière suffisante par les doigts 10 entourant tout le pourtour du tube.

Tel que décrit précédemment, l'élément de raccord selon l'invention peut faire l'objet de nombreuses variantes applicables indifféremment aux multiples formes en crois, T ou Y déjà mentionnées.

Selon une première variante, le boîtier 100 est plus profond que le couvercle, par exemple dans un rapport sensiblement égal à un quart et trois-quart de la hauteur totale. Alors, les encoches 50 sont de préférence ménagées au fond d'un créneau taillé dans la paroi latérale de telle sorte que le bord inférieur de l'encoche 50 reste proche du fond de la coque 100, tandis que les encoches 50 du couvercle sont ménagées dans une extension de la paroi latérale du couvercle en correspondance. Les parois latérales de cette coque 100 étant alors plus hautes, les bras 20 peuvent être réduits à de simples languettes ou barres de plastique partant des bords supérieurs ce qui évite l'emploi de la forme plus complexe en V renversé. De conception apparemment plus simple, cette variante est toutefois un peu plus difficile à réaliser car il convient de mouler en une seule pièce la coque, le couvercle et aussi les nervures montées sur leur languette fixée au bras.

Selon une autre variante, la coque 100 n'est munie que de deux nervures sur languettes d'un même côté proche des encoches 50 et le couvercle est alors également muni de deux languettes proches mais de l'autre côté de l'encoche correspondante. Egalement plus complexe à réaliser, cette variante permet d'avoir un maintien suivant un quart inférieur et le quart supérieur symétrique du tube.

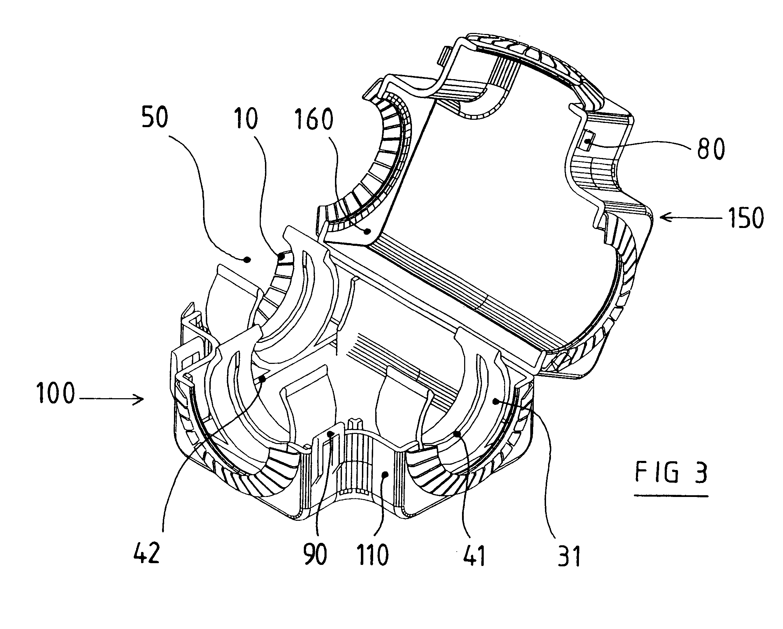

Un second mode de réalisation de l'invention va maintenant être décrit en référence à la figure 3 illustrant une boîte de raccord pour trois tubes. On retrouve, comme précédemment, un couvercle supérieur 150 relié à une coque inférieure 100 par un pont de matière plastique faisant office de charnière le long de leur bord longitudinal commun. Tel qu'illustré, le couvercle et la coque sont symétriques par rapport à leur plan de joint sans pour autant constituer une condition impérative. On reconnait également les moyens de fermetures : crochet 80 et bouches 90, ainsi que les encoches semi-circulaires 50 dans les parois latérales formant, après fermeture, les orifices pour les tubes annelés. Ces orifices sont également garnis de doigts flexibles 10 pour assurer l'étanchéité du réseau.

Toutefois, dans ce second mode de réalisation, les nervures 41 de maintien des tubes annelés sont situées sur des languettes arquées 31 plus importantes, c'est-à-dire qu'elles ont la forme d'un trois-quart de cercle, lesquelles languettes sont reliées en leur milieu au fond de la coque avec leurs deux extrémités orientées vers le haut. Bien évidemment, on peut également envisager vis-à-vis de chaque ouverture soit plusieurs nervures parallèles sur une languette, soit plusieurs languettes parallèles portant chacune une nervure.

Avantageusement, l'ensemble languette 31-nervure 41, avec son moyen de fixation 42, peut être réalisé séparément du boîtier puis y être rapporté par la suite. Le moyen de fixation illustré sur la figure est constitué d'une barre souple 42 sous-jacente au point médian de la languette et venant se bloquer entre les parties inférieures des deux parois opposées. En alternative, le moyen de fixation peut aussi être un tenon appartenant à la languette venant s'engager dans un trou correspondant de boîtier et éventuellement maintenu par colle ou soudure.

On comprend aisément comment, lors de l'utilisation, la languette arquée 31 fait office de clip autour du tube annelé à installer, assurant ainsi un maintien préliminaire suffisant. Le diamètre minimum d'un tube est déterminé par le rayon de courbure initial de la languette 31 ; et la plage possible de diamètres supérieurs dépend du degré de fermeture de la languette, c'est-à-dire 3/4 ou 4/5 de cercle, une languette trop fermée étant plus difficile de manipulation. Une fois les trois tubes installés, il suffit de rabattre et d'enclencher le couvercle contre la coque pour fermer de manière étanche le raccord.

## Revendications

1. Elément de raccord pour tubes annelés comprenant une coque inférieure (100) et un couvercle supérieur (150) dont les parois latérales (110,160) présentent plusieurs encoches semi-circulaires (50) en correspondance définissant, une fois le couvercle (150) fermé par dessus la coque (100), des ouvertures circulaires pour tubes annelés, et dont les faces internes sont munies, derrière les encoches et parallèlement à celles-ci, de nervures (40, resp. 41) sensiblement semi-circulaires pour le blocage longitudinal des tubes annelés, caractérisé en ce que les nervures (40, resp. 41) sont situées sur des languettes flexibles en arc-de-cercle (30, resp. 31) reliées aux faces internes dans un plan parallèle à l'ouverture correspondante, et en ce que les encoches (50) sont garnies d'une suite de doigts flexibles (10) en forme de secteur circulaire constituant pour les ouvertures des écrans en forme de couronne circulaire.

2. Elément de raccord pour tubes annelés selon la revendication 1, caractérisé en ce que seule la face interne de la coque (100) est munie, derrière et parallèlement à chaque encoche, de trois nervures (40) chacune située sur une languette en arc-de-cercle (30) reliée à une paroi interne par un bras flexibles (20), la languette médiane plus large étant disposée vis-à-vis et entre les deux autres.

3. Elément de raccord pour tubes annelés selon la revendication 2, caractérisé en ce que la coque (100) et le couvercle (150) sont symétriques par rapport à leur plan de joint et en ce que les bras flexibles (20) ont une forme de V renversé, la première branche étant fixée à la paroi interne, la seconde supportant les languettes en arc-de-cercle (30) munie d'une nervure (40).

4. Elément de raccord pour tubes annelés selon les revendications 2 et 3, caractérisé en ce que la première branche de chacun des trois bras flexibles (20) en forme de V renversé proche d'une ouverture sont fixées à une même pièce (70) de maintien fixée contre la paroi interne de la coque.

5. Elément de raccord pour tubes annelés selon la revendication 1, caractérisé en ce que la coque inférieure (100) est munie, derrière chaque encoche (50), d'au moins une languette (31) faisant entre 3/5 et 4/5 de cercle et portant au moins une nervure sensiblement semi-circulaire (41), laquelle languette (31) est reliée par son milieu au fond interne de la coque (100), parallèlement à l'encoche (50).

6. Elément de raccord pour tubes annelés selon la revendication 5, caractérisé en ce que la languette (31) avec son moyen de liaison (42) est une pièce indépendante rapportée.

7. Elément de raccord pour tubes annelés selon la revendication 5, caractérisé en ce que en ce que la coque (100) et le couvercle (200) sont symétriques par rapport à leur plan de joint.

**Patentansprüche**

1. Verbindungselement für Wellrohre mit einem Unterteil (100) und einem Deckel (150), deren Seitenwände (110, 160) mit mehreren halbkreisförmigen Ausnehmungen (50) versehen sind, die, nachdem der Deckel (150) das Unterteil (100) verschließt, kreisförmige Öffnungen für Wellrohre definieren, und deren Innenflächen hinter den Ausnehmungen und parallel zu diesen mit Rippen (40 bzw. 41) versehen sind, im wesentlichen ausgebildet sind, um die Wellrohre in Längsrichtung festzuhalten, dadurch gekennzeichnet, daß sich die Rippen (40 bzw. 41) auf kreisbogenförmigen, flexiblen Federn (30 bzw. 31) befinden, die mit den Innenflächen in einer Ebene, parallel zur entsprechenden Öffnung, in Verbindung stehen, und daß die Ausnehmungen (50) mit flexiblen Fingern (10) in der Form eines Kreisabschnittes versehen sind, die für die Öffnungen einen Schirm bilden, in der Form einer kreisförmigen Krone.

2. Verbindungselement für Wellrohre nach Anspruch 1, dadurch gekennzeichnet, daß nur die Innenfläche des Unterteils (100) hinter und parallel zu jeder Ausnehmung mit drei Rippen (40) versehen ist, die sich jeweils auf einer kreisbogenförmigen Feder (30) befinden und mit einer inneren Wandung über einen flexiblen Arm (20) gehalten sind, wobei die mittlere Feder, die größer ist, den beiden anderen gegenüberliegend und zwischen diesen angeordnet ist.

3. Verbindungselement für Wellrohre nach Anspruch 2, dadurch gekennzeichnet, daß das Unterteil (100) und der Deckel (150) symmetrisch zu ihrer Verbindungsebene sind, und daß die flexiblen Arme (20) die Form eines umgekehrten V besitzen, wobei der erste Schenkel an einer Innenwand befestigt ist, und der zweite, der die kreisbogenförmigen Federn (30) trägt, mit einer Rippe (40) versehen ist.

4. Verbindungselement für Wellrohre nach den Ansprüchen 2 und 3, dadurch gekennzeichnet, daß der erste Schenkel eines jeden der drei flexiblen Arme (20) in der Form eines umgekehrten V in der Nähe einer Öffnung an einem Halteteil (70) befestigt ist, das an der Innenwand des Unterteils befestigt ist.

5. Verbindungselement für Wellrohre nach Anspruch 1, dadurch gekennzeichnet, daß das Unterteil (100) hinter jeder Ausnehmung (50) mit mindestens einer Feder (31) versehen ist, die zwischen 3/5 und 4/5 eines Kreises bildet und mindestens eine halbkreisförmige Rippe (41) trägt, wobei die Feder (31) in der Mitte an der inneren Bodenfläche des Unterteils (100) parallel zur Ausnehmung gehalten ist.

6. Verbindungselement für Wellrohre nach Anspruch 5, dadurch gekennzeichnet, daß die Feder (31) mit ihrem Halteelement (42) ein unabhängiges Teil ist.

7. Verbindungselement für Wellrohre nach Anspruch 5, dadurch gekennzeichnet, daß das Unterteil (100) und der Deckel (150) symmetrisch in Bezug auf ihre Verbindungsebene sind.

**Claims**

1. A connector for corrugated tubes, comprising a lower shell (100) and an upper cover (150) having lateral walls (110, 160) having therein several corresponding semicircular openings (50) that define, when the cover (150) is closed on the shell (100), circular openings for receiving corrugated tubes, the lateral walls having inner faces provided, behind and parallel to the semicircular openings, with substantially semi-circular ribs (40, 41 respectively) for longitudinally holding corrugated tubes, characterised in that the ribs (40, 41 respectively) are situated on flexible arcuate tongues (30, 31 respectively) connected to the inner faces in a plane parallel to the corresponding opening, and in that the semi-circular openings (50) are fitted with a series of flexible fingers (10) in the shape of segments of a circle forming a crown-like skirt for the circular openings.

2. A connector for corrugated tubes according to claim 1, characterised in that the inner face of only the shell (100) is provided, behind and parallel to each semicircular opening, with three ribs (40), each situated on an arcuate tongue (30) connected to an inner wall by a flexible arm (20), there being a bigger median tongue between and facing opposite to the two others.

3. A connector for corrugated tubes according to claim 2, characterised in that the shell (100) and the cover (150) are symmetrical relative to their plane of joining and in that the flexible arms (20) are in the form of an inverted V having a first section connected to the inner wall and a second section supporting the arcuate tongues (30) carrying a rib (40).

4. A connector for corrugated tubes according to claims 2 and 3, characterised in that the first section of each of the three flexible V-shaped arms (20) adjacent to an opening are fixed on a single supporting piece (70) secured against the inner wall of the shell.

5. A connector for corrugated tubes according to claim 1, characterised in that the lower shell (100) is provided, behind each semi-circular opening (50), with at least one tongue (31) extending over 3/5ths to 4/5ths of a circle and carrying at least one substantially semi-circular rib (41), said tongue (31) being connected by a central part thereof to the inside of the bottom of the shell (100), parallel to the semi-circular opening (50).

6. A connector for corrugated tubes according to claim 5, characterized in that the tongue (31) with its connecting means (42) is a separate fitted part.

7. A connector for corrugated tubes according to claim 5, characterized in that the shell (100) and the cover (150) are symmetrical relative to their plane of joining.

FIG 1

F I G   2

EP 0 402 281 B1

FIG 3